# EUROPEAN PATENT APPLICATION

(11) **EP 4 727 083 A1**
(43) Date of publication of application: **15.04.2026**
(21) Application number: 24206372.5
(22) Date of filing: 14.10.2024
(51) Int. Cl.: H04L 43/02, H04L 43/06, H04W 24/00, H04W 64/00, H04L 41/00, H04L 41/06, H04L 43/04, H04L 43/16

(54) **STATIONARY NETWORK DEVICE, NETWORK MONITORING SYSTEM, AND NETWORK MONITORING METHOD**

(71) Applicant: Rohde & Schwarz GmbH & Co. KG, 81671 München (DE)
(72) Inventor: Schwarz, Kevin, 52146 Würselen (DE); Schreiber, Joachim, 52146 Würselen (DE); Mueller, Michael, 52146 Würselen (DE)
(74) Representative: Prinz & Partner mbB

(57) **Abstract**

A stationary network device (14) is described. The stationary network device (14) comprises a communication module (36), and at least one sensor assembly (38). The communication module (36) is configured to communicate with other network devices (14, 16). The at least one sensor assembly (38) is configured to detect a position of the stationary network device (14), a movement of the stationary network device (14), and/or an acceleration of the stationary network device (14), thereby obtaining status data that comprises information on the detected position, movement, and/or acceleration of the stationary network device (14). The at least one sensor assembly (38) is configured to generate a status message comprising the status data. The communication module (36) is configured to transmit the status message generated by the at least one sensor assembly (38). Further, a network monitoring system (10) and a network monitoring method are described.

## Description

The present invention generally relates to a stationary network device. The present invention further relates to a network monitoring system and to a network monitoring method of monitoring at least one stationary network device.

During the installation of stationary network devices such as RF antennas or routers, it is important that the mounting specifications suggested by the manufacturer or specified in a network plan for the installation are satisfied in order to ensure an optimal performance.

However, ensuring that the actual placement of the network device matches the planned configuration can be time-consuming and prone to errors.

Moreover, for network system administrators of an already installed network system, it is important to be able to quickly identify potential tampering with a network device of the network system in order to identify potential security breaches.

For example, an unauthorized person may try to access the network system by directly accessing a physical port of a network access point.

The object of the present is to provide a stationary network device, a network monitoring system, and a network monitoring method that allow for an easier installation and/or for an efficient surveillance of stationary network devices.

According to the present invention, the problem is solved by a stationary network device. The stationary network device comprises a communication module, and at least one sensor assembly. The communication module is configured to communicate with other network devices. The at least one sensor assembly is configured to detect a position of the stationary network device, a movement of the stationary network device, and/or an acceleration of the stationary network device, thereby obtaining status data that comprises information on the detected position, movement, and/or acceleration of the stationary network device. The at least one sensor assembly is configured to generate a status message comprising the status data. The communication module is configured to transmit the status message generated by the at least one sensor assembly.

Therein and in the following, the term "module" is understood to describe suitable hardware, suitable software, or a combination of hardware and software that is configured to have a certain functionality.

The hardware may, inter alia, comprise a CPU, a GPU, an FPGA, an ASIC, or other types of electronic circuitry.

Moreover, the term "stationary network device" is understood to denote a network device that has a fixed position that is not to be altered during operation of the stationary network device.

Further, the term "position" is understood to denote a location and/or an orientation. Accordingly, the sensor assembly detecting the position of the stationary network device may detect a location and/or an orientation of the stationary network device.

The present invention is based on the idea to provide the stationary network device with an additional sensor assembly that is detecting the position, movement, and/or acceleration of the stationary network device and generates a corresponding status message.

The status message may be transmitted to a predefined computer device, such as a computer device of a network administrator or of surveillance staff.

The status message allows to assess a state of the stationary network device for several purposes.

For example, as the status message may comprise information on the position of the stationary network device, the status message allows to assess a mounting position of the stationary network device, i.e. a mounting location and/or a mounting orientation of the stationary network device.

Accordingly, the automatically detected mounting position can be compared with a desired mounting position, such that is easier to assess whether the stationary network device has been mounted correctly.

Moreover, the automatically detected mounting position also allows to monitor the mounting position of the stationary network device over time. For example, if the mounting position of the stationary network device is changed by environmental factors such as strong wind or a falling branch, this change of the mounting position can be detected and corresponding repair procedures can be initiated.

Likewise, if the mounting position of the stationary network device is changed by unauthorized tampering with the stationary network device, this change of the mounting position can be detected and corresponding repair procedures can be initiated.

Accordingly, the stationary network device according to the present invention allows for automatic detection of changes of the mounting position, which allows to quickly deploy corresponding countermeasures and ensure a fast restoration of an optimal performance of the stationary network device.

Moreover, the information comprising the status message allows to assess whether an authorized person is trying to tamper with the stationary network device.

For example, if the unauthorized person tries to remove the stationary network device, or if the unauthorized person removes a cable from the stationary network device and/or inserts another cable in order to access the stationary network device directly, a corresponding movement of the stationary network device can be automatically detected by the at least one sensor assembly.

Accordingly, the stationary network device according to the present invention allows to automatically detect unauthorized tampering with the stationary network device, which allows a fast deployment of corresponding countermeasures.

The at least one sensor assembly may comprise a position and/or movement sensor.

In fact, the at least one sensor assembly may comprise an accelerometer, a gyroscope, a magnetometer, and/or a GNSS device. However, it is to be understood that any other suitable type of position and/or movement sensor may be used.

In an embodiment of the present invention, the stationary network device comprises a housing, wherein the at least one sensor assembly is accommodated in the housing. In other words, the sensor assembly is provided within the housing of the stationary network device.

For example, the sensor assembly may be provided within the housing of the station or network device, and may be attached to the housing of the stationary network device.

Alternatively, the sensor assembly may be attached to an outside of the housing of the stationary network device.

In fact, the stationary network device may comprise a power supply, wherein the power supply is configured to provide the sensor assembly with electrical power. Thus, less maintenance of the stationary network device is required, as it is not necessary to change batteries of the sensor assembly.

According to another aspect of the present invention, the at least one sensor assembly is configured to compare the detected position with a default position, wherein the status data comprises information on the comparison. Accordingly, the status signal generated by the sensor assembly may already comprise information on the comparison and possible deviations of the detected position from the default position.

In general, the default position may correspond to an intended position of the stationary network device. If the stationary network device is to be installed, the default position may correspond to the position in which the stationary network device has to be mounted. If the stationary network device is already installed, the default position may correspond to the correct position that is to be maintained.

For example, the default position may be set by an operator or administrator of the stationary network device.

As another example, the default position may be set to the position of the stationary network device after installation, i.e. to the actual position of the stationary network device after the stationary network device has been correctly installed.

As another example, the default position may be determined according to the required mounting specifications provided by a manufacturer of the stationary network device or by an administrator of the stationary network device.

In a further embodiment of the present invention, the at least one sensor assembly is configured to compare the detected movement and/or the detected acceleration with a movement threshold and/or an acceleration threshold, respectively, wherein the status data comprises information on the comparison. Accordingly, the status signal generated by the sensor assembly may already comprise information on the comparison, particularly on whether the detected movement exceeds the movement threshold and/or whether the detected acceleration exceeds the acceleration threshold.

In general, the movement threshold and the acceleration threshold may correspond to an allowed upper limit for movements or accelerations of the stationary network device, respectively.

For example, an outdoor mounted RF antenna may be subject to certain movement and/or acceleration due to environmental factors such as wind.

If the detected movement and/or the detected exhilaration exceeds the movement threshold and/or the acceleration threshold, respectively, it can be concluded that an unauthorized tampering is taking place or that repairs or rather re-mounting of the stationary network device may be necessary.

For example, the movement threshold and/or the acceleration threshold may be set by an operator or administrator of the stationary network device.

An aspect of the present invention provides that the stationary network device comprises a network access point, a network router, and/or a radio frequency, RF, antenna. In fact, the stationary network device may be a network access point, a network router, or an RF antenna.

However, it is to be understood that the stationary network device may be established as any other suitable type of network device.

According to the present invention, the problem further is solved by a network monitoring system. The network monitoring system comprises at least one stationary network device according to any one of the variants described above. The network monitoring system further comprises at least one computer device, wherein the communication module of the at least one stationary network device is configured to transmit the status message generated to the at least one computer device.

Accordingly, the at least one stationary network device can be monitored via the at least one computer device.

The at least one computer device may be a physical computer device. For example, the at least one computer device may be a personal computer, a laptop, a tablet, a smart phone, or any other suitable type of smart device.

The at least one computer device however may also be a virtual computer, also called virtual machine (VM), for instance provided by cloud computing.

Regarding the further advantages and properties of the network monitoring system, reference is made to the explanations given above with respect to the stationary network device, which also hold for the network monitoring system and vice versa.

In an embodiment of the present invention, the at least one computer device is configured to generate a user alert based on the status message and/or to control the at least one stationary network device to change operational mode based on the status message.

Accordingly, an operator or a system administrator may be alerted by the user alert. For example, the user alert may be displayed on a display of the at least one computer device, and/or may be played back via speakers of the at least one computer device.

Alternatively or additionally, the at least one network device may be shut down or controlled to enter a quarantine mode by the at least one computer device.

According to an aspect of the present invention, the network monitoring system comprises a surveillance system, wherein the at least one computer device is configured to control the surveillance system based on the status message. Accordingly, the operator or administrator of the at least one stationary network device is assisted in monitoring the at least one stationary network device, as the surveillance system is controlled automatically.

In a further embodiment of the present invention, the at least one surveillance system comprises at least one camera and/or an alarm system.

For example, the at least one camera may be automatically controlled to focus on the at least one stationary network device, such that a system administrator or surveillance staff receiving the corresponding camera footage can immediately verify whether actions need to be taken.

As another example, the alarm system may be automatically activated based on the status message.

A further aspect of the present invention provides that the at least one computer device is configured to compare the detected position comprised in the status data with a default position.

In general, the default position may correspond to an intended position of the stationary network device. If the stationary network device is to be installed, the default position may correspond to the position in which the stationary network device has to be mounted. If the stationary network device is already installed, the default position may correspond to the correct position that is to be maintained.

For example, the default position may be set by an operator or administrator of the stationary network device.

As another example, the default position may be set to the position of the stationary network device after installation, i.e. to the actual position of the stationary network device after the stationary network device has been correctly installed.

The at least one computer device may be configured to generate the user alert described above based on the comparison.

Alternatively or additionally, the at least one computer device may be configured to control the at least one network device to change operational mode as described above based on the comparison.

Alternatively or additionally, the at least one computer device may be configured to control the surveillance system as described above based on the comparison.

In an embodiment of the present invention, the at least one computer device is configured to compare the detected movement and/or the detected acceleration comprised in the status data with a movement threshold and/or an acceleration threshold, respectively.

In general, the movement threshold and the acceleration threshold may correspond to an allowed upper limit for movements or accelerations of the stationary network device, respectively, as described above.

The at least one computer device may be configured to generate the user alert described above based on the comparison.

Alternatively or additionally, the at least one computer device may be configured to control the at least one network device to change operational mode as described above based on the comparison.

Alternatively or additionally, the at least one computer device may be configured to control the surveillance system as described above based on the comparison.

In a further embodiment of the present invention, the at least one computer device comprises a user interface, wherein the user interface is configured to receive a user input, and wherein the at least one computer device is configured to set a default position, a movement threshold, and/or an acceleration threshold for the at least one stationary network device based on the user input. Accordingly, an operator or system administrator of the at least one stationary network device can adapt the default position, the movement threshold, and/or the acceleration threshold via the user interface.

An aspect of the present invention provides that the at least one computer device comprises a memory with a status data base saved in the memory, wherein the status data base comprises information on a default position, a movement threshold, and/or an acceleration threshold for the at least one stationary network device. In other words, the corresponding data for performing the comparison(s) described above may be saved in the memory. Thus, the expertise required for installing and/or monitoring the at least one stationary network device is reduced considerably, as the necessary information on the default position, the movement threshold, and/or the acceleration threshold is provided in the status data base.

However, it is also conceivable that a user may adapt the status data base via the user interface. In fact, the user may adapt the default position, the movement threshold, and/or the acceleration threshold stored in the status data base.

Generally, the stationary network device may have a memory. The memory can be used to store data, e.g. the status data, in case the stationary network device is not able to communicate with the other network device via the communication module for any reason e.g. loss of connection. In the memory, the information about the position, the movement and/or the acceleration of the stationary network device may be stored, e.g. the status data. Once the connection to the other network device is established, the status message can be transmitted while accessing the memory for obtaining the status data.

The stationary network device may also comprise an integrated analysis module such that the stationary network device is enabled to analyze the data gathered, e.g. the status data, particularly the data stored in the memory.

According to the present invention, the problem further is solved by a network monitoring method of monitoring at least one stationary network device. The network monitoring method comprises the steps of
- detecting, by at least one sensor assembly of the stationary network device, a position of the stationary network device, a movement of the stationary network device, and/or an acceleration of the stationary network device, thereby obtaining status data that comprises information on the detected position, movement, and/or acceleration of the stationary network device;
- generating, by the at least one sensor assembly, a status message comprising the status data; and
- transmitting, by a communication module of the at least one stationary network device, the status message.

The network monitoring system according to any one of the variants described above may be configured to perform the network monitoring method.

Regarding the advantages and further properties of the network monitoring method, reference is made to the explanations given above with respect to the network monitoring system and with respect to the stationary network device, which also hold for the network monitoring method and vice versa.

The foregoing aspects and many of the attendant advantages of the claimed subject matter will become more readily appreciated as the same become better understood by reference to the following detailed description, when taken in conjunction with the accompanying drawings, wherein:
- Figure 1 schematically shows a network monitoring system according to the present invention;
- Figure 2 schematically shows a stationary network device according to the present invention;
- Figure 3 shows a flow chart of a network monitoring method according to a first variant the present invention; and
- Figure 4 shows a flow chart of a network monitoring method according to a second variant of the present invention.

The detailed description set forth below in connection with the appended drawings, where like numerals reference like elements, is intended as a description of various embodiments of the disclosed subject matter and is not intended to represent the only embodiments. Each embodiment described in this disclosure is provided merely as an example or illustration and should not be construed as preferred or advantageous over other embodiments. The illustrative examples provided herein are not intended to be exhaustive or to limit the claimed subject matter to the precise forms disclosed.

For the purposes of the present disclosure, the phrase "at least one of A, B, and C", for example, means (A), (B), (C), (A and B), (A and C), (B and C), or (A, B, and C), including all further possible permutations when more than three elements are listed. In other words, the term "at least one of A and B" generally means "A and/or B", namely "A" alone, "B" alone or "A and B".

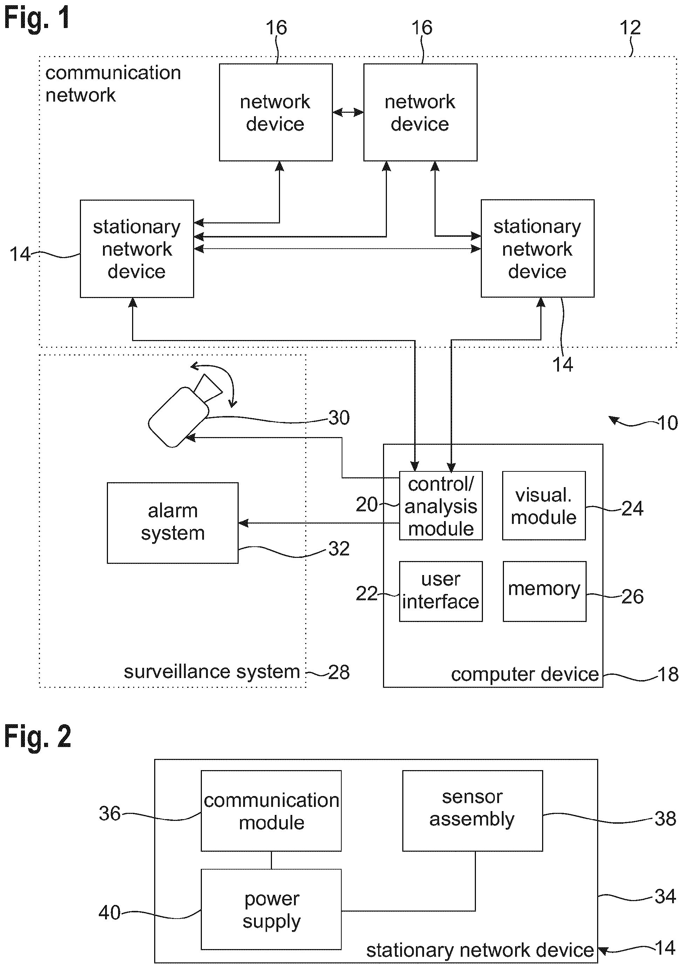

Figure 1 schematically shows a network monitoring system 10 for monitoring a communication network 12 having at least one stationary network device 14.

For example, the at least one stationary network device 14 may be or comprise a network access point, a network router, and/or a radio frequency, RF, antenna.

However, it is to be understood that the at least one stationary network device 14 may be established as any other suitable type of network device.

In the exemplary embodiment shown in Figure 1, the communication network 12 comprises two stationary network devices 14.

However, it is to be understood that the communication network 12 may comprise an arbitrary number of stationary network devices 14.

The communication network 12 may further comprise at least one further network device 16, which does not need to be stationary.

For example, the at least one further network device 16 may be a smartphone, a laptop, or another type of user device.

The stationary network devices 14 and the further network devices 16 are configured to communicate with each other via any suitable type of wired connection and/or via any suitable type of wireless connection.

For example, the stationary network devices 14 and the further network devices 16 may communicate with each other via a local area network (LAN), a wide area network (WAN), a wireless local area network (WLAN), a mobile communication connection such as 4G or 5G, Bluetooth, etc.

The network monitoring system 10 further comprises a computer device 18 that is connected to the at least one stationary network device 14 in a signal-transmitting manner.

In fact, the computer device 18 may be connected to the at least one stationary network device 14 via any suitable wireless and/or wired connection, particularly via any of the connection types described above.

For example, the computer device 18 may be established as a physical computer device such as a personal computer, a laptop, a tablet, a smart phone, a server, or as any other suitable type of smart device.

As another example, the computer device 18 may be a virtual computer, also called virtual machine (VM), for instance provided by cloud computing

The computer device 18 comprises a control and/or analysis module 20 that is connected to the at least one stationary network device 14.

The computer device 18 may further comprise a user interface 22, a visualization module 24, and/or a memory 26.

The functionality of the computer device 18 will be described in more detail below.

Optionally, the network monitoring system 10 may further comprise a surveillance system 28.

The surveillance system 28 may comprise at least one camera 30 that is connected to the control and/or analysis module 20 of the computer device 18 via any suitable type of wired and/or wireless connection.

Alternatively or additionally, the surveillance system 28 may comprise a alarm system 32 that is connected to the control and/or analysis module 20 via any suitable type of wired and/or wireless connection.

The at least one camera 30 may be a surveillance camera that is mounted in the vicinity of the at least one stationary network device 14.

For example, the at least one camera 30 may be rotatable such that the at least one camera 30 is enabled to capture images of different stationary network devices 14 and/or of a environment of the at least one stationary network device 14.

For example, the alarm system 32 may be configured to generate visual alarms such as flashing lights and/or lights having a predefined color. Such visual alarms may for example be installed in a surveillance room in which the computer device 18 is located.

Alternatively or additionally, the alarm system 32 may comprise acoustic alarms such as a siren or a horn. Such acoustic alarms may be installed in the surveillance room and/or in the vicinity of the at least one stationary network device 14.

Figure 2 schematically shows the at least one stationary network device 14 in more detail.

The stationary network device 14 has a housing 34 accommodating a communication module 36, a sensor assembly 38, and a power supply 40.

The communication module 36 is configured to exchange data and messages with other stationary network devices 16, the further network devices 16, and the computer device 18.

The sensor assembly 38 is configured to detect a position of the stationary network device 14, a movement of the stationary network device 14, and/or an acceleration of the stationary network device 14, as will be described in more detail below.

For example, the sensor assembly 38 may be or comprise an accelerometer, a gyroscope, a magnetometer, and/or a GNSS device. However, it is to be understood that any other suitable type of position and/or movement sensor may be used.

The sensor assembly 38 may be mounted to the housing 34.

It is to be understood that while the sensor assembly 38 is shown to be provided inside of the housing 34 in Figure 2, it is also conceivable that the sensor assembly 38 may be provided on an outside of the housing 34.

In fact, the sensor assembly 38 may be attached to an outer surface of the housing 34.

The power supply 40 is configured to provide the communication module 36 and the sensor assembly 38 with electrical power.

It is noted that the stationary network device 14 may further comprise a memory.

Alternatively or additionally, the stationary network device 14 may comprise an analysis module being configured to analyze data obtained by the sensor(s) of the sensor assembly 38.

In fact, the sensor assembly 38 may comprise the analysis module.

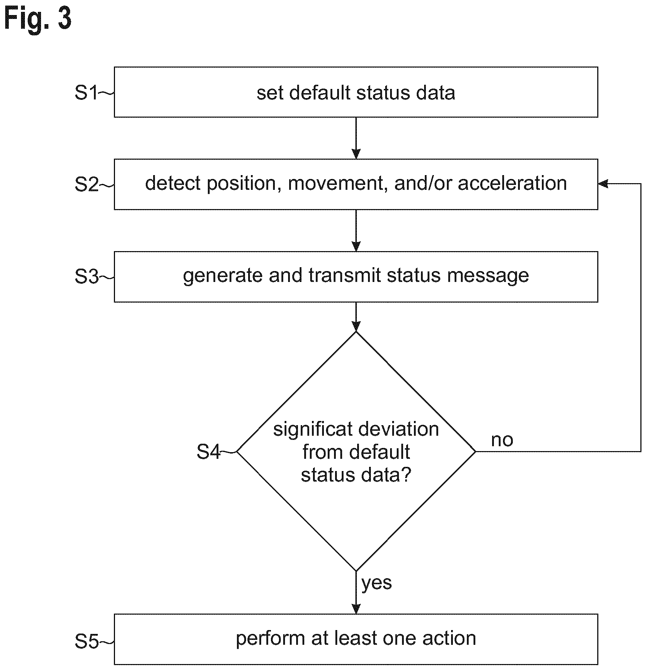

The network monitoring system 10 is configured to perform a network monitoring method of monitoring the at least one stationary network device 14, particularly of monitoring the communication network 12. The network monitoring method is described hereinafter with reference to Figure 3.

Default status data for the at least one stationary network device 14 is set (step S1).

The default status data may be set by an operator or system administrator via the user interface 22 of the computer device 18.

Alternatively or additionally, the default status data may be set automatically by the control and/or analysis module 20 based on a status data base that is saved in the memory 26.

The default status data may comprise a default position of the at least one stationary network device 14, a movement threshold for the at least one stationary network device 14, and/or an acceleration threshold for the at least one stationary network device 14.

The default position generally correspond to an intended position of the at least one stationary network device 14.

If the at least one stationary network device 14 is to be installed, the default position may correspond to the position in which the at least one stationary network device 14 has to be mounted.

If the at least one stationary network device 14 is already installed, the default position may correspond to the correct position that is to be maintained.

The movement threshold may correspond to an allowed upper limit for movements of the at least one stationary network device 14, particularly an allowed upper limit for rotations of the at least one stationary network device 14 and/or an allowed upper limit for translational movement of the at least one stationary network device 14.

The acceleration threshold may correspond to an allowed upper limit for accelerations of the at least one stationary network device 14.

A position of the at least one stationary network device 14, a movement of the at least one stationary network device 14, and/or an acceleration of the at least one stationary network device 14 is detected by the sensor assembly 38 of the at least one stationary network device 14, thereby obtaining status data that comprises information on the detected position, movement, and/or acceleration of the stationary network device (step S2).

Optionally, the at least one stationary network device 14 may further be configured to determine an operational time, wherein the operational time comprises information on how long or more precisely for which periods of time the at least one stationary network has been operational.

The status data may comprise the operational time.

The status data may be stored in the memory of the at least one stationary network device 14.

A status message comprising the status data is generated by the sensor assembly 38 and transmitted to the computer device 18 by the communication module 36 (step S3).

More precisely, the status message is transmitted to the control and/or analysis module 20.

In fact, the status message generated may be stored in the memory of the at least one stationary network device 14.

If a connection between the at least one stationary network device 14 and the computer device 18 is lost, the status message may be read from the memory and transmitted to the computer device 18 after the connection has been reestablished.

The control and/or analysis module 20 compares the status data comprised in the status message with the default status data (step S4).

In fact, the control and/or analysis module 20 may compare the detected position with the default position of the at least one stationary network device 14.

Alternatively or additionally, the control and/or analysis module 20 may compare the detected movement and/or the detected acceleration comprised in the status data with the movement threshold and/or the acceleration threshold for the at least one stationary network device 14.

The control and/or analysis module 20 may further compare the operational time comprised in the status data with a position of the at least one stationary network device 14 at different times of the at least one stationary network device 14 being operational.

For example, the control and/or analysis module 20 may compare the position of the at least one stationary network device 14 before and after an offline time of the at least one stationary network device 14 has occurred.

If the comparison indicates a significant deviation of the status data from the default status data, at least one action may be performed by the control and/or analysis module 20 (step S5).

More precisely, the at least one action may be performed if the detected position deviates from the default position by more than a predefined position threshold, if the detected movement exceeds the movement threshold, and/or if the detected acceleration exceeds the acceleration threshold.

Likewise, the at least one action may be performed if a position of the at least one stationary network device 14 before and after an offline time of the at least one stationary network device 14 differs by more than a predetermined threshold.

The at least one action to be performed may be set by an operator or system administrator via the user interface 22.

In fact, the operator or system administrator may define in which cases an action needs to be taken, and/or in which cases no action needs to be taken.

The at least one action may comprise controlling the visualization module 24 to generate a user alert.

The user alert may be displayed on a display of computer device 18 or on a display connected to the computer device 18, and/or may be played back via speakers of the at least one computer device 18.

Alternatively or additionally, the at least one action may comprise controlling the visualization module 24 to generate visualization data comprising information on the detected position, the detected movement, the detected acceleration, the default position, the movement threshold, and/or the acceleration threshold.

The visualization data may be displayed on a display of computer device 18 or on a display connected to the computer device 18.

It is noted that the visualization data may be generated and displayed regardless of whether the comparison indicates a significant deviation of the status data from the default status data, thereby allowing for a continuous surveillance of a status of the at least one stationary network device 14.

Alternatively or additionally, the at least one action may comprise controlling the at least one stationary network device 14 to enter to a predefined operational mode.

For example, the at least one stationary network device 14 may be controlled to shut down.

As another example, the at least one stationary network device 14 may be controlled to enter a quarantine mode. The at least one stationary network device 14 may only be allowed to communicate with certain devices or with no devices at all in the quarantine mode.

Alternatively or additionally, the at least one action may comprise controlling the surveillance system 28.

For example, the at least one camera 30 may be automatically controlled to focus on the corresponding stationary network device 14.

As another example, the alarm system 32 may be controlled to generate and output a visual alarm and/or an acoustic alarm.

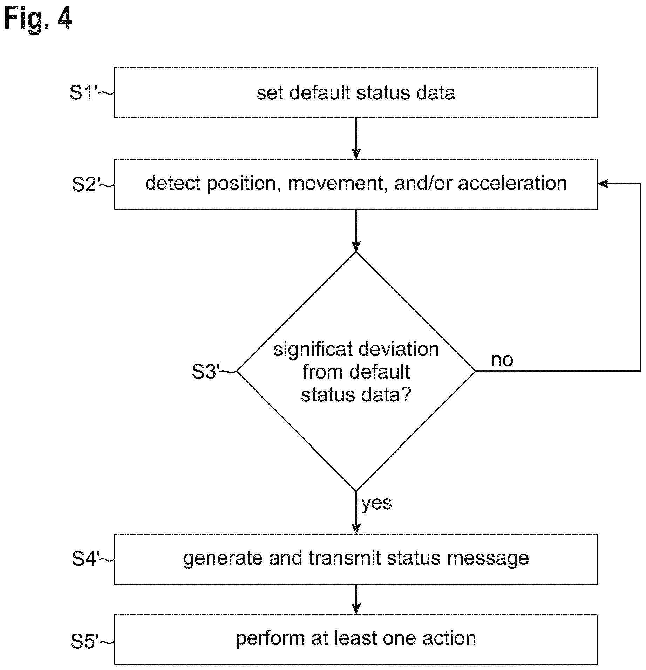

Figure 4 shows a further variant of the network monitoring method, wherein only the difference compared to the variant described above will be explained hereinafter.

Steps S1 and S2 are performed as described above (steps S1' and S2').

The sensor assembly 38 compares the status data with the default status data, analogously to step S4 described above (step S3').

It is noted that it is also conceivable that the at least one stationary network device 14 may automatically perform an action if the sensor assembly 38 detects a significant deviation of the status data from the default status data.

For example, the at least one stationary network device 14 may automatically shut itself down or may automatically enter a quarantine mode.

A status message comprising the status data as well as information on the comparison performed is generated by the sensor assembly 38 and transmitted to the computer device 18, or more precisely to the control and/or analysis module 20, by the communication module 36 (step S4').

As described above, the status message generated may be stored in the memory of the at least one stationary network device 14.

If a connection between the at least one stationary network device 14 and the computer device 18 is lost, the status message may be read from the memory and transmitted to the computer device 18 after the connection has been reestablished.

If the comparison indicates a significant deviation of the status data from the default status data, at least one action may be performed by the control and/or analysis module 20, analogously to step S5 described above (step S5').

Certain embodiments disclosed herein, particularly the respective module(s) and/or unit(s), utilize circuitry (e.g., one or more circuits) in order to implement standards, protocols, methodologies or technologies disclosed herein, operably couple two or more components, generate information, process information, analyze information, generate signals, encode/decode signals, convert signals, transmit and/or receive signals, control other devices, etc. Circuitry of any type can be used.

In an embodiment, circuitry includes, among other things, one or more computing devices such as a processor (e.g., a microprocessor), a central processing unit (CPU), a digital signal processor (DSP), an application-specific integrated circuit (ASIC), a field-programmable gate array (FPGA), a system on a chip (SoC), or the like, or any combinations thereof, and can include discrete digital or analog circuit elements or electronics, or combinations thereof. In an embodiment, circuitry includes hardware circuit implementations (e.g., implementations in analog circuitry, implementations in digital circuitry, and the like, and combinations thereof).

In an embodiment, circuitry includes combinations of circuits and computer program products having software or firmware instructions stored on one or more computer readable memories that work together to cause a device to perform one or more protocols, methodologies or technologies described herein. In an embodiment, circuitry includes circuits, such as, for example, microprocessors or portions of microprocessor, that require software, firmware, and the like for operation. In an embodiment, circuitry includes one or more processors or portions thereof and accompanying software, firmware, hardware, and the like.

The present application may reference quantities and numbers. Unless specifically stated, such quantities and numbers are not to be considered restrictive, but exemplary of the possible quantities or numbers associated with the present application. Also in this regard, the present application may use the term "plurality" to reference a quantity or number. In this regard, the term "plurality" is meant to be any number that is more than one, for example, two, three, four, five, etc. The terms "about", "approximately", "near" etc., mean plus or minus 5% of the stated value.

## Claims

1. A stationary network device, wherein the stationary network device (14) comprises a communication module (36), and at least one sensor assembly (38),
wherein the communication module (36) is configured to communicate with other network devices (14, 16),
wherein the at least one sensor assembly (38) is configured to detect a position of the stationary network device (14), a movement of the stationary network device (14), and/or an acceleration of the stationary network device (14), thereby obtaining status data that comprises information on the detected position, movement, and/or acceleration of the stationary network device (14),
wherein the at least one sensor assembly (38) is configured to generate a status message comprising the status data, and
wherein the communication module (36) is configured to transmit the status message generated by the at least one sensor assembly (38).

2. The stationary network device of claim 1, wherein the at least one sensor assembly (38) comprises an accelerometer, a gyroscope, a magnetometer, and/or a GNSS device.

3. The stationary network device according to any one of the preceding claims, wherein the stationary network device (14) comprises a housing (34), and wherein the at least one sensor assembly (38) is accommodated in the housing (34).

4. The stationary network device according to any one of the preceding claims, wherein the at least one sensor assembly (38) is configured to compare the detected position with a default position, wherein the status data comprises information on the comparison.

5. The stationary network device according to any one of the preceding claims, wherein the at least one sensor assembly (38) is configured to compare the detected movement and/or the detected acceleration with a movement threshold and/or an acceleration threshold, respectively, wherein the status data comprises information on the comparison.

6. The stationary network device according to any one of the preceding claims, wherein the stationary network device (14) comprises a network access point, a network router, and/or a radio frequency, RF, antenna.

7. A network monitoring system, wherein the network monitoring system (10) comprises at least one stationary network device (14) according to any one of the preceding claims, wherein the network monitoring system (10) further comprises at least one computer device (18), and wherein the communication module (36) of the at least one stationary network device (14) is configured to transmit the status message generated to the at least one computer device (18).

8. The network monitoring system of claim 7, wherein the at least one computer device (18) is configured to generate a user alert based on the status message and/or to control the at least one stationary network device (14) to change operational mode based on the status message.

9. The network monitoring system of claim 7 or 8, wherein the network monitoring system (10) comprises a surveillance system (28), and wherein the at least one computer device (18) is configured to control the surveillance system (28) based on the status message.

10. The network monitoring system of claim 9, wherein the at least one surveillance system (28) comprises at least one camera (30) and/or an alarm system (32).

11. The network monitoring system according to any one of claims 7 to 10, wherein the at least one computer device (18) is configured to compare the detected position comprised in the status data with a default position.

12. The network monitoring system according to any one of claims 7 to 11, wherein the at least one computer device (18) is configured to compare the detected movement and/or the detected acceleration comprised in the status data with a movement threshold and/or an acceleration threshold, respectively.

13. The network monitoring system according to any one of claims 7 to 12, wherein the at least one computer device (18) comprises a user interface (22), wherein the user interface (22) is configured to receive a user input, and wherein the at least one computer device (18) is configured to set a default position, a movement threshold, and/or an acceleration threshold for the at least one stationary network device based on the user input.

14. The network monitoring system according to any one of claims 7 to 13, wherein the at least one computer device (18) comprises a memory (26) with a status data base saved in the memory (26), wherein the status data base comprises information on a default position, a movement threshold, and/or an acceleration threshold for the at least one stationary network device (14).

15. A network monitoring method of monitoring at least one stationary network device (14), the network monitoring method comprising the steps of
- detecting, by at least one sensor assembly (38) of the stationary network device (14), a position of the stationary network device (14), a movement of the stationary network device (14), and/or an acceleration of the stationary network device (14), thereby obtaining status data that comprises information on the detected position, movement, and/or acceleration of the stationary network device (14);
- generating, by the at least one sensor assembly (38), a status message comprising the status data; and
- transmitting, by a communication module (36) of the at least one stationary network device (14), the status message.
